# FASCICULE DE BREVET EUROPEEN

(11) **EP 3 203 031 B1**
(45) Date de publication et mention de la délivrance du brevet: **26.09.2018**
(21) Numéro de dépôt: 17150648.8
(22) Date de dépôt: 09.01.2017
(51) Int. Cl.: F01D 9/04, F01D 25/02, F01D 5/16

(54) **AUBE STATORIQUE, TURBOMACHINE, AÉRONEF, ET MÉTHODE POUR DÉTACHER DE LA GLACE ASSOCIÉS**
LEITSCHAUFEL, ZUGEHÖRIGE STRÖMUNGSMASCHINE, FLUGZEUG UND VERFAHREN ZUM LOSBRECHEN VON EIS
STATOR BLADE, CORRESPONDING TURBOMACHINE, AIRCRAFT AND METHOD FOR DETACHING ICE

(30) Priorité: 21.01.2016 BE 201605048
(43) Date de publication de la demande: 09.08.2017
(73) Titulaire: Safran Aero Boosters SA, 4041 Herstal (BE)
(72) Inventeur: VALLINO, Frédéric, 4100 Seraing (BE)
(74) Mandataire: Gevers Patents

(56) Documents cités:
- FR-A1- 2 950 382
- GB-A- 2 472 053
- US-A1- 2011 318 181

## Description

### Domaine technique

Selon un premier aspect, la présente invention concerne une aube statorique pour un stator d'un compresseur basse pression d'une turbomachine. Plus précisément, la présente invention concerne une aube statorique prévue pour un stator d'un compresseur basse pression d'une turbomachine d'aéronef. Selon un deuxième aspect, la présente invention concerne une méthode pour détacher de la glace d'une aube statorique d'un stator d'un compresseur basse pression d'une turbomachine.

### Art antérieur

Le document US2011/0318181 A1 divulgue l'utilisation d'un matériau viscoélastique dans un profil aérodynamique de turbomachine. Lorsque de la glace s'accumule sur le profil aérodynamique, le déséquilibre de stabilité qui en résulte induit une vibration dans le profil. Le matériau viscoélastique amortit cette vibration, et cet amortissement induit un échauffement qui fait fondre la glace.

Cependant, l'échauffement dû à l'amortissement n'est pas capable de faire fondre la glace si elle se présente sous forme de blocs.

### Résumé de l'invention

Selon un premier aspect, un des buts de l'invention est de fournir une aube statorique capable de détacher de manière plus efficace de la glace présente sur elle, notamment quand la glace est présente sous forme de blocs. A cet effet, l'invention propose une aube statorique prévue pour un stator d'un compresseur basse pression d'une turbomachine, l'aube incluant au moins une portion en matériau apte à la super-élasticité, caractérisée en ce que l'au moins une portion en matériau à mémoire de forme apte à la super-élasticité est agencée pour entrer en résonance à un régime prédéterminé de la turbomachine.

Grâce à la résonance, la portion en matériau apte à la super-élasticité se met à vibrer, ce qui fait que la glace s'en détache, même si la glace se présente sous forme de blocs. De préférence, l'aube selon l'invention retour dans un état normal (pas de résonance quand la glace se détache.

De plus, les vibrations permettent de minimiser la formation de glace.

De préférence, l'entièreté de l'aube est constituée d'un matériau à mémoire de forme apte à la super-élasticité et agencée pour entrer en résonance à un régime prédéterminé de la turbomachine.

L'effet physique utilisé par l'invention est différent de l'effet proposé par le document US2011/0318181 A1 puisque ce dernier utilise un amortissement des vibrations alors que l'invention utilise l'amplitude des vibrations, qui est particulièrement grande en résonance. Il n'y a pas de résonance dans l'aube décrite dans le document US2011/0318181 A1 vu qu'il y apparait un amortissement des vibrations qui est un effet physique opposé au phénomène de résonance. L'agencement de l'aube de l'invention, dont une portion est prévue pour entrer en résonance, est par conséquent différent de celui de l'aube décrite dans le document US2011/0318181 A1.

La résonance entraine une augmentation des vibrations dans la portion d'aube en matériau apte à la super-élasticité. Les vibrations ainsi amplifiées ont préférentiellement une amplitude de maximum 10%, plus préférentiellement de maximum 5%, encore plus préférentiellement de maximum 2%, de la taille de la portion d'aube en matériau apte à la super-élasticité.

Il est intéressant de noter que l'invention va à l'encontre des préjugés de l'homme du métier selon lesquels il est dommageable qu'une portion d'une aube statorique entre en résonance car les vibrations dues à la résonance risquent d'endommager la portion en question. Dans le cadre de la présente invention, la super-élasticité de la portion permet de résoudre ce problème car les caractéristiques de ce type de matériau permettent que la portion en question ne soit pas endommagée par les vibrations dues à la résonance.

Dans le cadre du présent document, une "résonance" est une augmentation d'une amplitude d'une vibration sous l'influence d'impulsions périodiques de fréquence proche de la fréquence de la vibration.

L'agencement de la portion en matériau apte à la super-élasticité implique qu'une ou plusieurs des caractéristiques suivantes sont conçues de façon à ce que la portion en matériau apte à la super-élasticité entre en résonance à un régime prédéterminé de la turbomachine: la forme de la portion, la forme de l'aube, les dimensions de la portion, le module de Young de la portion, les dimensions de l'aube, la position de la portion dans l'aube, la masse de la portion et la masse de l'aube, la présence de glace sur l'aube ou sur la portion en matériau à mémoire de forme.

Dans le présent document, un "régime prédéterminé" de la turbomachine peut correspondre à un intervalle de nombres de rotations effectuées par la turbomachine par unité de temps, à un intervalle de proportion de pleine admission de la turbomachine, à un intervalle de vitesse d'un aéronef propulsé par la turbomachine, à un intervalle d'altitude de vol d'un aéronef propulsé par la turbomachine ou à une phase de vol (telle que décollage, croisière ou atterrissage) d'un aéronef propulsé par la turbomachine.

Par exemple, un intervalle de nombres de rotations correspondant à un régime déterminé peut être entre 5000 et 20.000 tours par minute, préférentiellement entre 7000 et 12.000 tours par minute.

Par exemple, un intervalle de proportion de pleine admission de la turbomachine peut être entre 65% et 90% de la pleine admission, préférentiellement entre 75% et 85%.

Par exemple, un intervalle de vitesse d'un aéronef propulsé par la turbomachine peut être entre 300 et 1200 km/h, préférentiellement entre 500 et 800km/h.

Par exemple, un intervalle d'altitude de vol d'un aéronef propulsé par la turbomachine peut être entre 6000 et 15.000 m, préférentiellement entre 8000 et 12.000 m.

Dans une réalisation de l'invention, le régime prédéterminé de la turbomachine correspond à un régime de croisière d'un aéronef comprenant la turbomachine.

Préférentiellement, l'au moins une portion en matériau apte à la super-élasticité est agencée de façon à être dans un état de super-élasticité dans un intervalle de température où la température est négative.

Il est particulièrement intéressant que durant la phase de vol, par exemple le vol de croisière, où la température de l'air passant autour de l'aube statorique est négative, la turbomachine soit dans un régime entraînant la résonance de la portion en matériau apte à la super-élasticité et le matériau apte à la super-élasticité soit dans un état super-élastique, car c'est lorsque la température est négative qu'il y a un risque de formation de glace sur l'aube. En particulier, lors d'un régime de croisière d'un aéronef comprenant la turbomachine, l'air environnant l'aéronef peut avoir une température de -60°C à -20°C, en particulier de -57°C à -40°C, plus en en particulier de -57°C à -30°C.

L'air entrant dans la turbomachine peut s'y réchauffer au fur et à mesure de son trajet. Il peut donc être intéressant, notamment pour une portion en matériau apte à la super-élasticité se trouvant en contact avec de l'air réchauffé, d'avoir un état de super-élasticité dans l'intervalle de températures typiques de l'air en contact avec cette portion en régime de croisière, qui peut être un intervalle de températures plus élevées que les températures atmosphériques typiques d'un régime de croisière.

Selon différents modes de réalisation de l'invention, qui peuvent être pris ensemble ou séparément :
- l'au moins une portion en matériau apte à la super-élasticité est agencée de façon à être dans un état de super-élasticité dans un intervalle de température de -57°C à -30°C,
- le matériau apte à la super-élasticité est un matériau à mémoire de forme,
- l'au moins une portion en matériau apte à la super-élasticité est disposée à la surface d'extrados de l'aube,
- l'au moins une portion en matériau apte à la super-élasticité est disposée à la surface d'intrados de l'aube,
- l'au moins une portion en matériau apte à la super-élasticité est disposée au bord d'attaque de l'aube,
- l'au moins une portion en matériau apte à la super-élasticité est disposée au bord de fuite de l'aube,
- l'au moins une portion en matériau apte à la super-élasticité est située à une hauteur intermédiaire entre une virole interne et une virole externe du stator.

L'invention concerne en outre une turbomachine comprenant un stator ayant une aube statorique selon l'invention et un aéronef comprenant ladite turbomachine.

Selon un deuxième aspect, un des buts de l'invention est de fournir une méthode pour détacher de la glace d'une aube statorique d'une turbomachine de manière efficace. A cet effet, l'invention propose une méthode pour détacher de la glace d'une aube statorique d'un compresseur basse pression d'une turbomachine d'aéronef et comprenant les étapes suivantes :
- fournir une turbomachine comprenant un compresseur basse pression ayant un stator avec une aube statorique comprenant au moins une portion en matériau à mémoire de forme apte à la super-élasticité agencée de façon à être dans un état de super-élasticité dans un intervalle de température où la température est négative,
- exposer l'aube statorique à une température comprise dans ledit intervalle de l'étape précédente de façon à mettre l'au moins une portion en matériau à mémoire de forme apte à la super-élasticité dans un état super-élastique et soumettre l'au moins une portion à des conditions d'humidité telles que de la glace puisse de déposer sur l'au moins une portion, et
- mettre la turbomachine dans un régime tel que l'au moins une portion en matériau apte à la super-élasticité entre en résonance Les avantages mentionnés pour le dispositif s'appliquent mutatis mutandis à la méthode.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1 illustre une aube et des viroles faisant partie d'un stator, dans une réalisation de l'invention,
- les figures 2a, 2b, 2c, 2d illustrent chacune une section de l'aube avec la portion en matériau apte à la super-élasticité positionnée à différents endroits de l'aube, et
- la figure 3 illustre une réalisation de l'invention dans laquelle la portion en matériau apte à la super-élasticité est à une hauteur intermédiaire entre la virole interne et la virole externe.

### Modes de réalisation préférés de l'invention

La présente invention est décrite avec des réalisations particulières et des références à des figures mais l'invention n'est pas limitée par celles-ci. Les dessins ou figures décrits ne sont que schématiques et ne sont pas limitants.

Dans le contexte du présent document, les termes « premier » et « deuxième » servent uniquement à différencier les différents éléments et n'impliquent pas d'ordre entre ces éléments.

Sur les figures, les éléments identiques ou analogues peuvent porter les mêmes références.

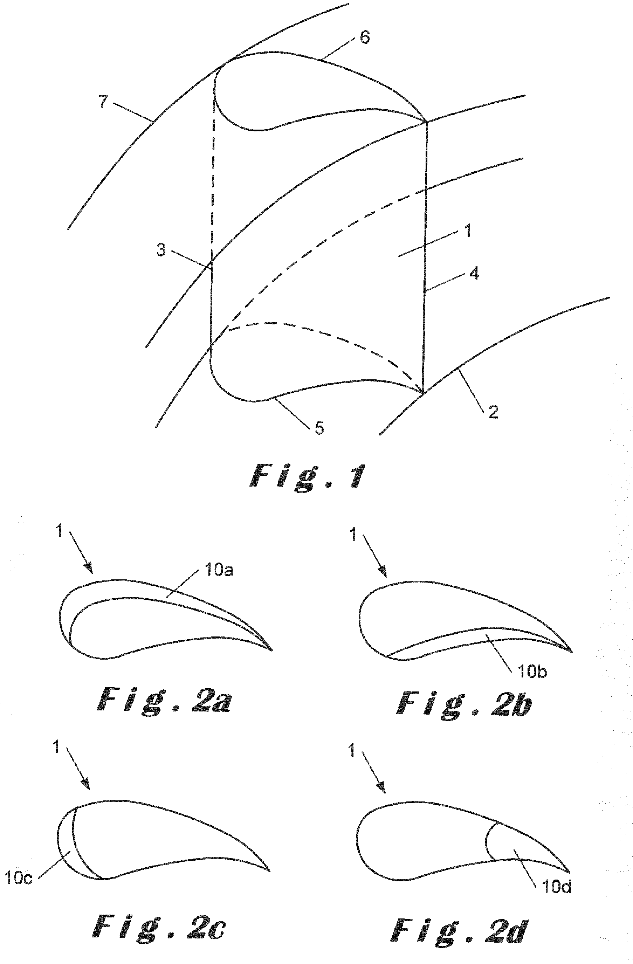

La figure 1 illustre une aube 1 statorique et un morceau d'une virole interne 2, et un morceau d'une virole externe 7 faisant partie d'un stator, dans une réalisation de l'invention, l'aube 1 statorique étant dans une première configuration. L'aube 1 est fixée sur les viroles 2, 7 de manière à ce que l'aube 1 puisse se déformer par rapport au viroles 2, 7. L'aube 1 a une ligne de bord d'attaque 3, une ligne de bord de fuite 4, une surface d'intrados 5 et une surface d'extrados 6. La surface d'intrados 5 est la surface concave de l'aube 1 et la surface d'extrados 6 est la surface convexe de l'aube 1.

Dans une réalisation de l'invention, l'aube 1 statorique selon l'invention est fixée à une seule virole. Dans une réalisation de l'invention, au moins une des viroles est faite de plateformes. La virole externe 7 est préférentiellement fixée à un carter.

Le stator comprend préférentiellement une rangée annulaire d'aubes 1 statoriques selon l'invention. L'aube 1 statorique selon l'invention est préférentiellement utilisée dans un redresseur pour un compresseur d'une turbomachine d'aéronef.

L'aube 1 selon l'invention comprend une portion dans un matériau apte prendre un état super-élastique, c'est-à-dire un matériau apte à la super-élasticité.

De préférence, l'aube 1 selon l'invention comprend un moyen pour maintenir l'amplitude des vibrations dans la portion d'aube en matériau apte à la super-élasticité dans un intervalle entre -10% et 10% de la taille de la portion d'aube en matériau apte à la super-élasticité. Plus préférentiellement, l'aube 1 selon l'invention comprend un moyen pour maintenir l'amplitude des vibrations dans la portion d'aube en matériau apte à la super-élasticité dans un intervalle entre -5% et 5% de la taille de la portion d'aube en matériau apte à la super-élasticité. Encore plus préférentiellement, l'aube 1 selon l'invention comprend un moyen pour maintenir l'amplitude des vibrations dans la portion d'aube en matériau apte à la super-élasticité dans un intervalle entre -2% et 2% de la taille de la portion d'aube en matériau apte à la super-élasticité.

L'aube 1 statorique selon l'invention est particulièrement appropriée pour une turbomachine, en particulier pour une turbomachine d'aéronef, et en particulier pour un compresseur basse pression dans un turbomachine.

La portion en matériau apte à la super-élasticité est agencée pour vibrer avec une amplitude suffisante lors de sa résonance pour détacher de la glace présent dessus. Dans le cadre du présent document, la glace peut être du givre.

La portion en matériau apte à la super-élasticité est préférentiellement agencée de façon à être dans un état de super-élasticité dans un intervalle de température où de la glace risque de se former dessus, en particulier dans un intervalle de température où la température est négative.

La portion en matériau apte à la super-élasticité est agencée pour entrer en résonance lorsque turbomachine comprenant l'aube 1 statorique selon l'invention, entre dans un régime prédéterminé. Ce régime peut par exemple être un régime de croisière d'un aéronef comprenant la turbomachine, car c'est typiquement lors de la phase de vol de l'aéronef qui correspond à ce régime que sont rencontrées par l'aube 1 des températures négatives risquant de créer de la glace sur l'aube 1.

En particulier, le matériau apte à la super-élasticité peut être un matériau à mémoire de forme. Le matériau à mémoire de forme est préférentiellement un alliage à mémoire de forme, par exemple Ni-Ti, Cu-Al-Zn, Cu-Ni, Cu-Z-Ni ou Cu-Ni-Al. Le matériau à mémoire peut passer d'une phase austénite à une phase martensite en fonction de sa température et/ou d'une contrainte mécanique qu'il subit.

La portion en matériau apte à la super-élasticité subit préférentiellement une éducation avant l'installation de l'aube 1 dans la turbomachine. L'éducation comprend la répétition d'un cycle entre un premier ensemble de valeurs de paramètres et un deuxième ensemble de valeurs de paramètres, les paramètres étant préférentiellement la température et la contrainte mécanique subie par le matériau.

Dans une réalisation de l'invention, toute l'aube 1 est dans le matériau apte à la super-élasticité. Dans d'autres réalisations de l'invention, une partie de l'aube 1, qui est la portion en matériau apte à la super-élasticité, est dans le matériau apte à la super-élasticité. Dans d'autres réalisations de l'invention, plusieurs parties de l'aube 1 sont dans le matériau à mémoire de forme, c'est-à-dire que l'aube 1 comprend plusieurs portions dans un matériau apte à la super-élasticité.

Le figure 2a illustre une section de l'aube 1 dans une réalisation de l'invention dans laquelle la portion 10Ia en matériau apte à la super-élasticité est disposée à la surface d'extrados 6.

Le figure 2b illustre une section de l'aube 1 dans une réalisation de l'invention dans laquelle la portion 10b en matériau apte à la super-élasticité est disposée à la surface d'intrados 5.

Le figure 2c illustre une section de l'aube 1 dans une réalisation de l'invention dans laquelle la portion 10c en matériau apte à la super-élasticité est disposée au bord d'attaque 3.

Le figure 2d illustre une section de l'aube 1 dans une réalisation de l'invention dans laquelle la portion 10d en matériau apte à la super-élasticité est disposé au bord de fuite 4.

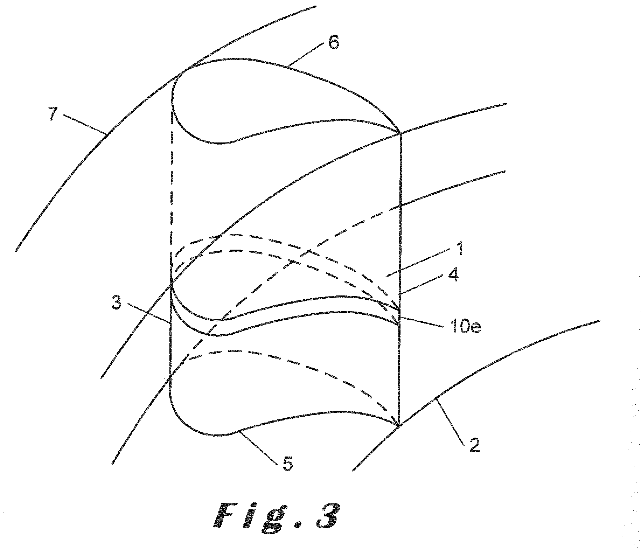

La figure 3 illustre une réalisation de l'invention dans laquelle la portion 10e en matériau apte à la super-élasticité est à une hauteur intermédiaire entre la virole interne 2 et la virole externe 7.

Les réalisations des figures 2a, 2b, 2c, 2d et 3 sont combinables entre elles, par exemple dans une réalisation de l'invention où la portion 10 en matériau apte à la super-élasticité est à une hauteur intermédiaire entre la virole interne 2 et la virole externe 7 et uniquement à proximité du bord d'attaque 3.

En d'autres termes, l'invention se rapporte à une aube 1 statorique qui inclut une portion 10 en matériau apte à la super-élasticité. La portion 10 en matériau apte à la super-élasticité est agencée pour entrer en résonance à un régime prédéterminé de la turbomachine notamment lors d'un régime de la turbomachine typique de la phase de croisière de l'aéronef. En outre, le matériau apte à la super-élasticité est agencé pour être dans un état super-élastique lorsque de la glace risque de se former dessus, notamment lors de températures typiques de la phase de croisière de l'aéronef. Par conséquent, lors de la phase de croisière, durant laquelle de la glace risque de se former sur la portion 10Ia portion 10 en matériau apte à la super-élasticité, les vibrations dues à la résonance empêchent la formation de glace, et en particulier de blocs de glace, et la super-élasticité de la portion 10Ia portion 10 en matériau apte à la super-élasticité fait qu'il n'est pas endommagé par lesdites vibrations.

## Revendications

1. Aube (1) statorique pour un stator d'un compresseur basse pression d'une turbomachine, l'aube (1) comprenant au moins une portion (10) en matériau à mémoire de forme apte à la super-élasticité, **caractérisée en ce que** l'au moins une portion (10) en matériau à mémoire de forme apte à la super-élasticité est agencée pour entrer en résonance à un régime prédéterminé de la turbomachine.

2. Aube (1) statorique selon la revendication 1, dans laquelle le régime prédéterminé de la turbomachine correspond à un régime de croisière d'un aéronef comprenant la turbomachine.

3. Aube (1) statorique selon la revendication précédente dans laquelle l'au moins une portion (10) en matériau à mémoire de forme apte à la super-élasticité est agencée pour entrer en résonance quand elle est couverte de glace.

4. Aube (1) statorique selon l'une quelconque des revendications précédentes, dans laquelle la portion (10) en matériau à mémoire de forme apte à la super-élasticité est agencée de façon à être dans un état de super-élasticité dans un intervalle de température de -57°C à -30°C.

5. Aube (1) statorique selon l'une quelconque des revendications précédentes **caractérisée en ce qu'**elle est entièrement constituée d'un matériau à mémoire de forme apte à la super-élasticité et agencée pour entrer en résonance à un régime prédéterminé de la turbomachine.

6. Aube (1) statorique selon l'une quelconque des revendications précédentes dans laquelle l'au moins une portion (10a) en matériau à mémoire de forme apte à la super-élasticité est disposée sur une surface d'extrados (6) de l'aube (1).

7. Aube (1) statorique selon l'une quelconque des revendications précédentes dans laquelle l'au moins une portion (10b) en matériau à mémoire de forme apte à la super-élasticité est disposée sur une surface d'intrados (5) de l'aube (1).

8. Aube (1) statorique selon l'une quelconque des revendications précédentes dans laquelle l'au moins une portion (10c) en matériau à mémoire de forme apte à la super-élasticité est disposée sur un bord d'attaque (3) de l'aube (1).

9. Aube (1) statorique selon l'une quelconque des revendications précédentes dans laquelle l'au moins une portion (10d) en matériau à mémoire de forme apte à la super-élasticité est disposée au bord de fuite (4) de l'aube (1).

10. Aube (1) statorique selon l'une quelconque des revendications précédentes dans laquelle l'au moins une portion (10e) en matériau à mémoire de forme apte à la super-élasticité est située à une hauteur intermédiaire entre une virole interne (2) et une virole externe (7) du stator.

11. Turbomachine comprenant un compresseur basse pression comprenant un stator ayant une aube (1) statorique selon l'une quelconque des revendications précédentes.

12. Aéronef comprenant la turbomachine selon la revendication précédente.

13. Méthode pour détacher de la glace d'une aube statorique d'un stator d'un compresseur basse pression d'une turbomachine d'aéronef et comprenant les étapes suivantes :
• fournir une turbomachine comprenant un compresseur basse pression ayant un stator comprenant une aube (1) statorique incluant au moins une portion (10) en matériau à mémoire de forme apte à la super-élasticité agencée de façon à être dans un état de super-élasticité dans un intervalle de températures négatives,
• exposer l'aube (1) statorique à une température comprise dans ledit intervalle de l'étape précédente de façon à mettre l'au moins une portion (10) en matériau à mémoire de forme apte à la super-élasticité dans un état super-élastique et soumettre l'au moins une portion (10) à des conditions d'humidité telles que de la glace puisse se déposer sur l'au moins une portion (10),
**caractérisée par** l'étape de
• mettre la turbomachine dans un régime tel que l'au moins une portion (10) en matériau apte à la super-élasticité entre en résonance.

14. Méthode selon la revendication précédente **caractérisée en ce que** ledit intervalle de températures négatives est compris entre -57°C à -30°C.

## Patentansprüche

1. Statorschaufel (1) für einen Stator eines Niederdruckverdichters einer Turbomaschine, wobei die Schaufel (1) mindestens einen Abschnitt (10) aus Formgedächtnismaterial umfasst, das zur Superelastizität fähig ist, **dadurch gekennzeichnet, dass** der mindestens eine Abschnitt (10) aus Formgedächtnismaterial, das zur Superelastizität fähig ist, dazu eingerichtet ist, bei einer vorbestimmten Drehzahl der Turbomaschine in Resonanz zu treten.

2. Statorschaufel (1) nach Anspruch 1, wobei die vorbestimmte Drehzahl der Turbomaschine einer Flugdrehzahl eines Flugzeugs entspricht, welches die Turbomaschine umfasst.

3. Statorschaufel (1) nach dem vorstehenden Anspruch, wobei der mindestens eine Abschnitt (10) aus Formgedächtnismaterial, das zur Superelastizität fähig ist, dazu eingerichtet ist, in Resonanz zu treten, wenn er mit Eis bedeckt ist.

4. Statorschaufel (1) nach einem der vorstehenden Ansprüche, wobei der Abschnitt (10) aus Formgedächtnismaterial, das zur Superelastizität fähig ist, so eingerichtet ist, dass er sich in einem Temperaturintervall von -57 °C bis -30 °C in einem Superelastizitätszustand befindet.

5. Statorschaufel (1) nach einem der vorstehenden Ansprüche, **dadurch gekennzeichnet, dass** sie vollständig aus einem Formgedächtnismaterial besteht, das zur Superelastizität fähig ist, und dazu eingerichtet ist, bei einer vorbestimmten Drehzahl der Turbomaschine in Resonanz zu treten.

6. Statorschaufel (1) nach einem der vorstehenden Ansprüche, wobei der mindestens eine Abschnitt (10a) aus Formgedächtnismaterial, das zur Superelastizität fähig ist, an einer Saugseitenfläche (6) der Schaufel (1) angeordnet ist.

7. Statorschaufel (1) nach einem der vorstehenden Ansprüche, wobei der mindestens eine Abschnitt (10b) aus Formgedächtnismaterial, das zur Superelastizität fähig ist, an einer Druckseitenfläche (5) der Schaufel (1) angeordnet ist.

8. Statorschaufel (1) nach einem der vorstehenden Ansprüche, wobei der mindestens eine Abschnitt (10c) aus Formgedächtnismaterial, das zur Superelastizität fähig ist, an einer Angriffskante (3) der Schaufel (1) angeordnet ist.

9. Statorschaufel (1) nach einem der vorstehenden Ansprüche, wobei der mindestens eine Abschnitt (10d) aus Formgedächtnismaterial, das zur Superelastizität fähig ist, an der Abströmkante (4) der Schaufel (1) angeordnet ist.

10. Statorschaufel (1) nach einem der vorstehenden Ansprüche, wobei der mindestens eine Abschnitt (10e) aus Formgedächtnismaterial, das zur Superelastizität fähig ist, auf einer Zwischenhöhe zwischen einem Innenmantel (2) und einem Außenmantel (7) des Stators liegt.

11. Turbomaschine, die einen Niederdruckverdichter umfasst, der einen Stator umfasst, welcher eine Statorschaufel (1) nach einem der vorstehenden Ansprüche aufweist.

12. Flugzeug, das die Turbomaschine nach dem vorstehenden Anspruch umfasst.

13. Verfahren zum Ablösen von Eis von einer Statorschaufel eines Stators eines Niederdruckverdichters einer Turbomaschine eines Flugzeugs, und umfassend die folgenden Schritte:
- Bereitstellen einer Turbomaschine, die einen Niederdruckverdichter umfasst, der einen Stator aufweist, welcher eine Statorschaufel (1) umfasst, die mindestens einen Abschnitt (10) aus Formgedächtnismaterial, das zur Superelastizität fähig ist, einschließt, der so eingerichtet ist, um sich in einem Minustemperaturintervall in einem Superelastizitätszustand zu befinden,
- Exponieren der Statorschaufel (1) gegenüber einer Temperatur, die im Intervall des vorstehenden Schritts umfasst ist, um den mindestens einen Abschnitt (10) aus Formgedächtnismaterial, das zur Superelastizität fähig ist, in einen Superelastizitätszustand zu bringen, und Aussetzen des mindestens einen Abschnitts (10) gegenüber Feuchtigkeitsbedingungen, derart, dass sich Eis an dem mindestens einen Abschnitt (10) anlagern kann, **gekennzeichnet durch** den Schritt des
- Bringens der Turbomaschine auf eine Drehzahl, derart, dass der mindestens eine Abschnitt (10) aus Material, das zur Superelastizität fähig ist, in Resonanz tritt.

14. Verfahren nach dem vorstehenden Anspruch, **dadurch gekennzeichnet, dass** das Minustemperaturintervall zwischen -57 °C und -30 °C umfasst ist.

## Claims

1. Stator blade (1) for a stator of a low-pressure compressor of a turbomachine, the blade (1) comprising at least one portion (10) in a shape memory material fit for super-elasticity, **characterised in that** the at least one portion (10) in a shape memory material fit for super-elasticity is arranged to enter into resonance at a predetermined speed of the turbomachine.

2. Stator blade (1) according to claim 1, wherein the predetermined speed of the turbomachine corresponds to a cruising speed of an aircraft comprising the turbomachine.

3. Stator blade (1) according to the preceding claim, wherein the at least one portion (10) in a shape memory material fit for super-elasticity is arranged to enter into resonance when it is covered in ice.

4. Stator blade (1) according to any one of the preceding claims, wherein the portion (10) in a shape memory material fit for super-elasticity is arranged to be in a state of super-elasticity in a temperature range of -57°C to - 30°C.

5. Stator blade (1) according to any one of the preceding claims, **characterised in that** it is entirely consisting of a shape memory material fit for super-elasticity and arranged to enter into resonance at a predetermined speed of the turbomachine.

6. Stator blade (1) according to any one of the preceding claims, wherein the at least one portion (10a) in a shape memory material fit for super-elasticity is arranged on an extrados surface (6) of the blade (1).

7. Stator blade (1) according to any one of the preceding claims, wherein the at least one portion (10b) in a shape memory material fit for super-elasticity is arranged on an intrados surface (5) of the blade (1).

8. Stator blade (1) according to any one of the preceding claims, wherein the at least one portion (10c) in a shape memory material fit for super-elasticity is arranged on a leading edge (3) of the blade (1).

9. Stator blade (1) according to any one of the preceding claims, wherein the at least one portion (10d) in a shape memory material fit for super-elasticity is arranged on the trailing edge (4) of the blade (1).

10. Stator blade (1) according to any one of the preceding claims wherein the at least one portion (10e) in a shape memory material fit for super-elasticity is located at an intermediate height between an inner shroud (2) and an outer shroud (7) of the stator.

11. Turbomachine comprising a low-pressure compressor comprising a stator having a stator blade (1) according to any one of the preceding claims.

12. Aircraft comprising a turbine engine according to the preceding claim.

13. Method for detaching ice from a stator blade of a stator of a low-pressure compressor of an aircraft turbomachine and comprising the following steps:
• providing a turbomachine comprising a low-pressure compressor having a stator comprising a stator blade (1) that includes at least one portion (10) in a shape memory material fit for super-elasticity arranged to be in a state of super-elasticity in a range of negative temperatures,
• exposing the stator blade (1) to a temperature comprised within said range of the preceding step so as to put the at least one portion (10) in a shape memory material fit for super-elasticity in a state of super-elasticity and to subject the at least one portion (10) to humidity conditions whereby ice can deposit itself on the at least one portion (10), **characterised by** the step of
• putting the turbomachine at a speed whereby the at least one portion (10) in a material fit for super-elasticity enters into resonance.

14. Method according to the preceding claim, **characterised in that** said range of negative temperatures is comprised between -57°C and -30°C.
